# EUROPEAN PATENT APPLICATION

(11) **EP 2 637 321 A1**
(43) Date of publication of application: **11.09.2013**
(21) Application number: 12305284.7
(22) Date of filing: 09.03.2012
(51) Int. Cl.: H04B 7/06

(54) **Apparatus, method and computer program for a base station transceiver**

(71) Applicant: Alcatel Lucent, 75007 Paris (FR)
(72) Inventor: Hoek, Cornelis, 71732 Tamm (DE)
(74) Representative: 2SPL Patentanwälte

(57) **Abstract**

Embodiments provide an apparatus, a method and a computer program for a base station transceiver in a mobile communication system. The base station transceiver 100 is operable to use a plurality of antennas to communicate with a mobile transceiver 200. The apparatus 10 comprises means for receiving 12 feedback information from the mobile transceiver 200. The feedback information comprises information on a plurality of different radio signals received from the base station transceiver 100 at the mobile transceiver 200. The apparatus further comprises means for controlling 14 a transmission on the plurality of antennas in a first mode, in which the plurality of antennas is subdivided in at least two subgroups of antennas. The means for controlling 14 is operable to adjust signals to be transmitted by a subgroup of antennas based on the feedback information, and the means for controlling 14 is operable to adjust signals transmitted on the antennas of one subgroup among each other based on a group specific beamforming vector. The means for controlling 14 is operable to control a transmission on the plurality of antennas in a second mode, in which the means for controlling 14 is operable to adjust the signals transmitted on each of the plurality of antennas individually based on an antenna specific weight.

## Description

Embodiments of the present invention relate to radio transceivers, more particularly but not exclusively to base station transceivers using advanced transmission concepts.

### Background

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. As operators are seeking to extend the coverage and capacity of their networks advanced transmission concepts as multi antenna transmission are exploited.

For example, base station transceivers of communication systems utilize multiple antennas to transmit and receive signals to and from mobile transceivers. Multiple different advanced transmission concepts are known, which can be utilized in such a scenario. For example, Multiple-Input-Multiple-Output (MIMO) transmission schemes can be used when multiple antennas are also available at the mobile transceiver. MIMO concepts can allow for simultaneous transmission of multiple data streams, which are spatially multiplexed. Other concepts make use of beamforming, i.e. coherent or incoherent superposition of radio signals, which can also take advantage of the geometry of antenna arrangements and can make use of feedback information exchanged between a base station transceiver and a mobile transceiver.

### Summary

Embodiments are based on the finding that there is a trend to increase the number of base station antennas in order to improve gain and interference rejection. Moreover, it is a finding that if the number of antennas is increased above 4 or 8 antennas then a problem may arise because the present generations of mobile transceivers support only 4 or 8 transmit (TX) antennas for a subset of DownLink (DL) algorithms. That is to say, some of the advanced antenna concepts may use more antennas than a mobile transceiver may support, e.g. in terms of feedback provision.

It is a further finding that a plurality of antennas can be split up in groups or subgroups. For example, *nm* antennas of a base station transceiver can be split up or subdivided in *n* groups of *m* antennas and a fixed beam forming network can be used for every group of *m* antennas, wherein *nm* are positive integer numbers. The use of the fixed beam forming network for every group takes advantage of the multiple antennas as such, but avoids needing individual feedback per antenna but rather per group. It is a further finding that for a base station transceiver and a mobile station transceiver the grouped antennas can appear like there are only *n* antennas with a more complicated antenna pattern. It is a further finding that the base station transceiver may then have less degrees of freedom (*n-1* instead of *n x m-1*) for optimization of the antenna patterns. Also, a fixed implementation of the beam forming of the antenna groups may make the optimization e.g. of down tilts difficult or impossible and it may also limit the performance of the uplink algorithms, where there are no restrictions for the number of antennas.

Embodiments are based on the finding that the receive (RX) - TX signals of all *m x n* antennas can be processed in the baseband. Furthermore, for the RX (uplink) direction all RX signals can be used. In the TX (downlink) direction different beam forming modes can be used. Embodiments provide an apparatus for a base station transceiver in a mobile communication system, i.e. embodiments may provide said apparatus to be operated by or included in a base station transceiver. In the following, the apparatus will also be referred to as base station transceiver apparatus. Embodiments may also provide a base station transceiver comprising the base station transceiver apparatus.

The mobile communication system may, for example, correspond to one of the mobile communication systems standardized by the 3rd Generation Partnership Project (3GPP), as Global System for Mobile Communications (GSM), Enhanced Data rates for GSM Evolution (EDGE), GSM EDGE Radio Access Network (GERAN), Universal Terrestrial Radio Access Network (UTRAN) or Evolved UTRAN (E-UTRAN), e.g. Universal Mobile Telecommunication System (UMTS), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Code Division Multiple Access (CDMA), Orthogonal Frequency Division Multiple Access (OFDMA) or any other technology with a multiplexing capable physical layer like Filter Bank Based Multicarrier (FBMC) systems. In the following the terms mobile communication system and mobile communication network are used synonymously.

In embodiments, the mobile communication system may comprise mobile transceivers and base station transceivers. A mobile transceiver may correspond to a smartphone, a cell phone, user equipment, a laptop, a notebook, a personal computer, a Personal Digital Assistant (PDA), a Universal Serial Bus (USB) -stick, a car, etc. A mobile transceiver may also be referred to as User Equipment (UE) in line with the 3GPP terminology. A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, a remote radio head, a transmission point etc., which may be further subdivided in a remote unit and a central unit.

In embodiments the base station transceiver is operable to use a plurality of antennas to communicate with a mobile transceiver. The plurality of antennas can be arranged in many different ways. Some examples are in a uniform linear array (horizontal of vertical), a circular array, a triangular array, array of cross-polarized antennas, an antenna plane, as multi-dimensional array, etc. The antennas themselves can, for example, be dipole antennas, patch antennas, etc. The base station transceiver apparatus comprises means for receiving feedback information from the mobile transceiver. The means for receiving may correspond to a receiver compliant to one of the above communication standards or systems. Generally, any receiver for receiving radio signals is conceivable, e.g. an OFDM receiver. The means for receiving may use the plurality of antennas for receiving the corresponding radio signals, which comprise feedback information. The feedback information comprises information on a plurality of different radio signals received from the base station transceiver at the mobile transceiver. That is to say the mobile transceiver receives radio signals from the base station transceiver, which may comprise pilot or reference signals. Based on these signals the mobile transceiver can be enabled to estimate the radio channels between an antenna from which a radio signal was transmitted and one or more receiving antennas of the mobile transceiver. The feedback information may then comprise information on the estimated radio channels.

The apparatus further comprises means for controlling a transmission on the plurality of antennas in a first mode and in a second mode. In other words, the means for controlling is operable to select one out of at least two modes for transmission on the plurality of antennas. In embodiments the means for controlling can correspond to a controller, which can be implemented in a processor, a digital signal processor, etc. In the first mode of transmission the plurality of antennas is subdivided in at least two subgroups of antennas. The means for controlling is operable to adjust a signal to be transmitted by a subgroup of antennas based on the feedback information. That is to say, the adjustment based on the feedback information is identical for all antennas or antenna elements of a subgroup. The means for controlling is further operable to adjust signals transmitted on the antennas of one subgroup among each other based on a group specific beamforming vector. In the second mode the means for controlling is operable to adjust the signals transmitted on each of the plurality of antennas individually based on an antenna specific weight. In other words, in this first mode the plurality of antennas is subdivided in subgroups of antennas. Each subgroup of antennas can be treated as a single antenna, i.e. the signal provided to a subgroup can be processed as a signal which is provided to a single antenna only, based on feedback information. Within a subgroup a fixed or semi-static adjustment for the signals of the individual antennas can be used.

In embodiments the number of different radio signals received from the base station transceiver at the mobile transceiver may correspond to a number of different transmit signals, which can be distinguished by the mobile transceiver. The number of different radio signals may correspond to the number of subgroups of antennas. That is to say, the mobile transceiver may distinguish the radio signals, which are transmitted by the different subgroups. For example, the mobile transceiver may be enabled to distinguish different antennas at the base station transceiver, for example by means of different reference signals, which are transmitted by the different antennas. In an embodiment the different reference signals may then be transmitted by the different subgroups, which pretend to be or appear to the mobile transceiver as a single antenna. The mobile transceiver is now able to distinguish between the signals from the different subgroups, but cannot distinguish between the signals transmitted on the individual antennas within a subgroup. However, the base station transceiver may use the individual antennas of a subgroup to take advantage of beamforming.

The means for controlling can be operable to transmit a broadcast signal or a common pilot signal in the first mode, i.e. in embodiments the first mode can be used for transmission of pilots. In further embodiments the first mode can also be used for closed loop modes with mobiles that support only few TX antennas. The means for controlling may be operable to transmit a data signal in a closed loop mode in the first mode, the closed loop mode being a mode in which the feedback information comprises information on the signals transmitted in each of the at least two subgroups of antennas. In such an embodiment the feedback information may comprise information on a channel phase and attenuation. Based on this feedback information at the base station transceiver, i.e. the means for controlling, can adjust the signals of the individual groups, for example, such that a capacity of the radio link to the mobile transceiver is improved or optimized.

In some embodiments the antennas are split up in *n* groups of *m* antennas. The means for controlling may be operable to adjust the signals transmitted on the antennas of one subgroup using a variable group specific beamforming vector. The means for controlling may be operable to adapt the group specific beamforming vector based on radio channel conditions between the one subgroup of antennas and the mobile transceiver receiving a radio signal from the one subgroup. That is to say, every antenna group may have an individual variable weight vector for distributing 1 input signal to *m* TX antennas of the subgroup. The weight vector can be adapted depending on the channel conditions, e.g. to change down tilts in a vertical antenna array. In another embodiment the means for controlling may be operable to adjust the variable group specific beamforming vector by selecting a predetermined beamforming vector from a limited set of beamforming vectors. The limited set of beamforming vectors may correspond to a set of fixed beams, which can be switched within a subgroup on a coarse time scale, i.e. semi-statically. The means for controlling can be operable to form a different antenna beam for each of the subgroups. The means for controlling can be operable to adjust a down tilt of an antenna pattern within a subgroup.

In embodiments, the mapping of the transmit signals to the plurality of antennas may be described with a weight matrix, having *m* inputs for *m* subgroup-signals and *nm* outputs for *nm* antenna elements. The weight matrix consists of a (*m* x *nm*) matrix with *nm* non-zero elements.

In embodiments, the second mode can be used with data, which is transmitted using dedicated pilots e.g. for use with Coordinated MultiPoint (CoMP) transmission or Network MIMO schemas. The means for controlling can then be operable to transmit a dedicated pilot signal in the second mode. The pilot signal is dedicated to the mobile transceiver. As the signals, which are transmitted on the plurality of antennas in the second mode may differ mutually, each mobile transceiver may happen to have a different beamforming vector and a different beam. In order to enable proper channel estimation by a mobile transceiver, dedicated pilot signals may be provided using the user individual beams. The use of common pilot channels can be disadvantageous when using user specific beams, because the reference symbols transmitted on the common pilot channel use a different beam and therewith experience a different phase shift than the data symbols transmitted on the user specific beam. Data transmission may then experience a degradation because of systematic errors when using common pilot channels for channel estimation. In the second mode, each of the input signals may be multiplied with a size *nm* vector, resulting in *nm-1* degrees of freedom for shaping the antenna pattern. The weight matrix may then consist of a (*m x nm*) matrix with in general no zero elements. The means for controlling can be operable to form as many beams as there are mobile transceivers associated to the base station transceiver in the second mode. In other words, each mobile transceiver associated to the base station transceiver may be served with an individual beam. The means for controlling is then operable to form a beam, which is individually adapted to the mobile transceiver in the second mode.

In further embodiments the means for controlling can be operable to receive signals using the plurality of antennas and using a variable weight vector having as many coefficients as there are antennas in the plurality of antennas. In other words, in the uplink all antennas may be used and full advantage of all antennas may be taken. The means for controlling can be further operable to transmit as many different data streams as subgroups. That is to say, the different subgroups may be used to transmit different data streams to the mobile transceiver, e.g. carrying out spatial multiplexing as part of MIMO transmission. The means for controlling can be operable to transmit signals on the different subgroups using a precoding vector for precoding the signals transmitted of the subgroups, wherein information on the precoding vector is comprised in the feedback information. In other words, the mobile transceiver may provide as part of the feedback information precoding information, for example in terms of a reference to a precoding codebook.

Embodiments further provide a method for a base station transceiver in a mobile communication system. The base station transceiver is operable to use a plurality of antennas to communicate with a mobile transceiver. The method comprises receiving feedback information from the mobile transceiver. The feedback information comprises information on a plurality of different radio signals received from the base station transceiver at the mobile transceiver. The method further comprises controlling a transmission on the plurality of antennas in a first mode, in which the plurality of antennas is subdivided in at least two subgroups of antennas. The method comprises in the first mode adjusting signals to be transmitted by a subgroup of antennas based on the feedback information, and adjusting signals transmitted on the antennas of one subgroup among each other based on a group specific beamforming vector. The method comprises controlling a transmission on the plurality of antennas in a second mode comprising adjusting the signals transmitted on each of the plurality of antennas individually based on an antenna specific weight.

Embodiments further provide a computer program having a program code for performing one of the above described methods, when the computer program is executed on a computer or processor.

### Brief description of the Figures

Some other features or aspects will be described using the following non-limiting embodiments of apparatuses and/or methods and/or computer programs by way of example only, and with reference to the accompanying figures, in which
Fig. 1 shows an embodiment of a base station transceiver apparatus; and
Fig. 2 shows a block diagram of an embodiment of a method for a base station transceiver.

### Description of some Embodiments

Various embodiments will now be described in more detail with reference to the accompanying drawings. In the figures, the thicknesses of lines, layers and/or regions may be exaggerated for clarity.

Accordingly, while embodiments are capable of various modifications and alternative forms, embodiments thereof are shown by way of example in the figures and will herein be described in detail. It should be understood, however, that there is no intent to limit embodiments to the particular forms disclosed, but on the contrary, embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

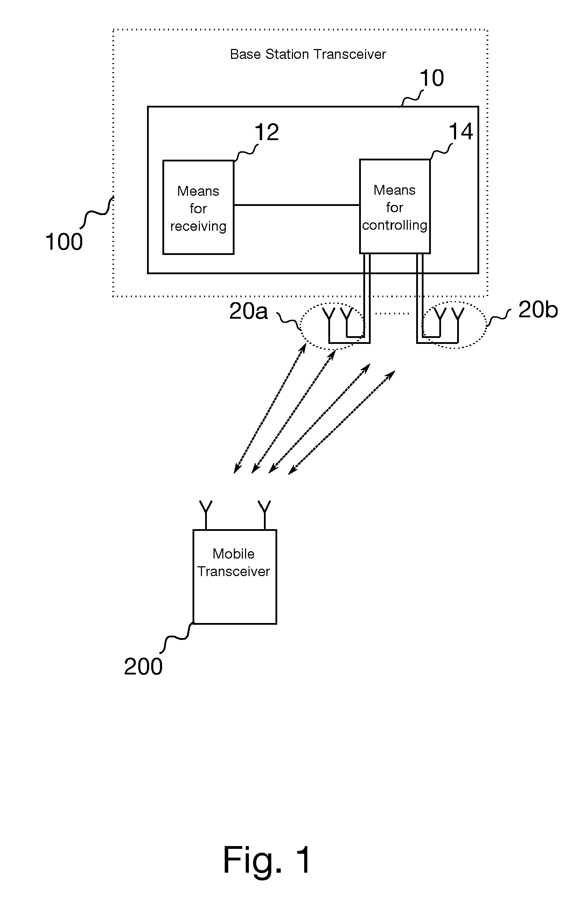

Fig. 1 shows an embodiment of an apparatus 10 for a base station transceiver 100 in a mobile communication system. The base station transceiver 100 is operable to use a plurality of antennas 20a, 20b to communicate with a mobile transceiver 200. As indicated in Fig. 1 the mobile transceiver 200 may also use multiple antennas. The communication is indicated by the double sided dotted arrows in Fig. 1. The base station transceiver apparatus 10 comprises means for receiving 12 feedback information from the mobile transceiver 200. The feedback information comprises information on a plurality of different radio signals received from the base station transceiver 100 at the mobile transceiver 200.

The base station transceiver apparatus 10 further comprises means for controlling 14 a transmission on the plurality of antennas 20a, 20b in a first mode, in which the plurality of antennas is subdivided in at least two subgroups 20a, 20b of antennas, wherein the means for controlling 14 is operable to adjust signals to be transmitted by a subgroup 20a of antennas based on the feedback information, and wherein the means for controlling 14 is operable to adjust signals transmitted on the antennas of one subgroup 20a among each other based on a group specific beamforming vector. The means for controlling 14 is further operable to control the transmission on the plurality of antennas 20a, 20b in a second mode, in which the means for controlling 14 is operable to adjust the signals transmitted on each of the plurality of antennas individually based on an antenna specific weight. In the embodiment illustrated in Fig.1 it is assumed that at least two subgroups 20a and 20b are formed. The adjustment of the signals may refer to weighting of the signals in terms of a manipulation or modification of their phases and/or their amplitudes.

The base station transceiver apparatus 10 performs a remapping of the *n*>*m* TX antennas 20a, 20b to *m* beams in order to be able to use the legacy codebooks, to which the respective feedback information refers, for *m* TX.

The number of different radio signals received from the base station transceiver 100 at the mobile transceiver 200 corresponds to the number of different transmit signals, which can be distinguished by the mobile transceiver 200 and the number of different radio signals corresponds to the number of subgroups of antennas 20a, 20b. In the embodiment depicted in Fig. 1 it is assumed that the mobile transceiver 200 can distinguish two radio signals received from the base station transceiver 100 by different pilot signals.

The means for controlling 14 is operable to transmit common pilot signals as broadcast signals in the first mode using each of the two subgroups 20a, 20b. The means for controlling 14 is operable to transmit a data signal in a closed loop mode in the first mode. That is to say, the feedback information comprises information on the signals transmitted in each of the two subgroups of antennas such that the signals transmitted in the subgroups can be adjusted so to coherently superimpose at the mobile transceiver 200. The means for controlling 14 is operable to adjust the signals transmitted on the antennas of one subgroup using a variable group specific beamforming vector and the means for controlling 14 is operable to adapt the group specific beamforming vector based on radio channel conditions between the one subgroup of antennas and the mobile transceiver receiving a radio signal from the one subgroup. The means for controlling 14 is operable to adjust the variable group specific beamforming vector by selecting a predetermined beamforming vector from a limited set of beamforming vectors.

In the present embodiment, the group specific beamforming vector is selected from a set of fixed or predetermined beamforming vectors. The beamforming vector is selected on a coarse time scale based on uplink measurements, i.e. the beam is selected for which the long term average signal quality in the uplink is the highest, e.g. in terms of an average Signal-to-Noise-Ratio (SNR), Signal-to-Noise-and-Interference-Ratio (SINR). A different antenna beam may thus be selected for each of the subgroups. Moreover, the means for controlling 14 is operable to adjust a down tilt of an antenna pattern within a subgroup, e.g. also by means of selecting one from a limited set of fixed beams having different down tilt characteristics.

When transmitting in the second mode a dedicated pilot signal, being dedicated to the mobile transceiver 200, is transmitted to enable proper channel estimation. The means for controlling 14 is operable to receive signals using the plurality of antennas in the uplink and uses a variable weight vector having as many coefficients as there are antennas in the plurality of antennas.

In another embodiment, the means for controlling 14 is operable to transmit as many different data streams as subgroups, e.g. two data streams which are spatially multiplexed. The means for controlling 14 can then be operable to transmit signals on the different subgroups using a precoding vector for precoding the signals transmitted of the subgroups, where information on the precoding vector is comprised in the feedback information. The means for controlling 14 can be operable to form a beam, which is individually adapted to the mobile transceiver in the second mode.

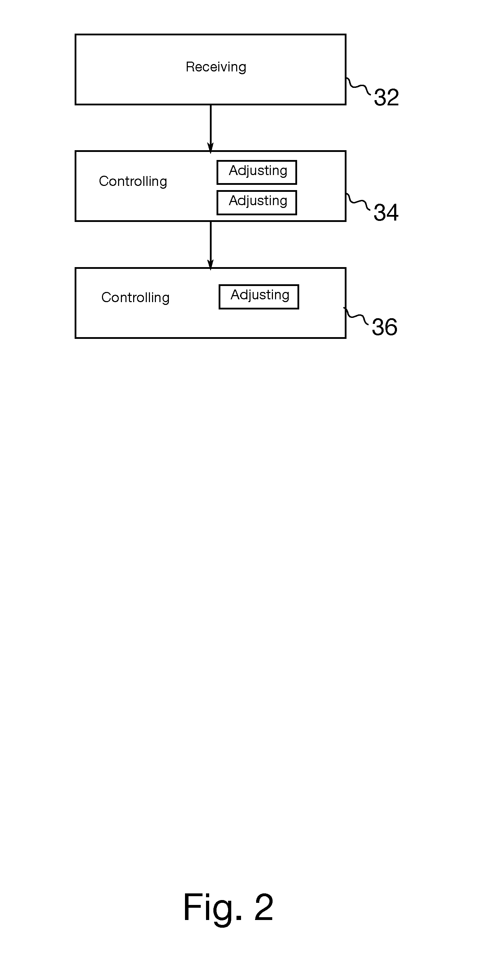

Fig. 2 shows a block diagram of an embodiment of a method for a base station transceiver in a mobile communication system. The base station transceiver 100 is operable to use a plurality of antennas to communicate with a mobile transceiver 200. The method comprises receiving 32 feedback information from the mobile transceiver 200. The feedback information comprises information on a plurality of different radio signals received from the base station transceiver 100 at the mobile transceiver 200. The method comprises controlling 34 a transmission on the plurality of antennas in a first mode, in which the plurality of antennas is subdivided in at least two subgroups of antennas. The controlling 34 comprises adjusting signals to be transmitted by a subgroup of antennas based on the feedback information, and adjusting signals transmitted on the antennas of one subgroup among each other based on a group specific beamforming vector. The method further comprises controlling 34 a transmission on the plurality of antennas in a second mode, comprising adjusting the signals transmitted on each of the plurality of antennas individually based on an antenna specific weight.

Embodiments may further provide a computer program having a program code for performing one of the above methods, when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to per-form a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for receiving", "means for controlling", "means for adjusting", etc., may be provided through the use of dedicated hardware, such as "a receiver", "a controller", "an adjuster", etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for a base station transceiver (100) in a mobile communication system, the base station transceiver (100) being operable to use a plurality of antennas to communicate with a mobile transceiver (200), the apparatus (10) comprising
means for receiving (12) feedback information from the mobile transceiver (200), the feedback information comprising information on a plurality of different radio signals received from the base station transceiver (100) at the mobile transceiver (200); and
means for controlling (14) a transmission on the plurality of antennas
in a first mode,
in which the plurality of antennas is subdivided in at least two subgroups of antennas, wherein the means for controlling (14) is operable to adjust signals to be transmitted by a subgroup of antennas based on the feedback information, and wherein the means for controlling (14) is operable to adjust signals transmitted on the antennas of one subgroup among each other based on a group specific beamforming vector, and
in a second mode,
in which the means for controlling (14) is operable to adjust the signals transmitted on each of the plurality of antennas individually based on an antenna specific weight.

2. The apparatus (10) of claim 1, wherein the number of different radio signals received from the base station transceiver (100) at the mobile transceiver (200) corresponds to a number of different transmit signals, which can be distinguished by the mobile transceiver (200) and/or wherein the number of different radio signals corresponds to the number of subgroups of antennas.

3. The apparatus (10) of claim 1, wherein the means for controlling (14) is operable to transmit a broadcast signal and/or a common pilot signal in the first mode.

4. The apparatus (10) of claim 1, wherein the means for controlling (14) is operable to transmit a data signal in a closed loop mode in the first mode, the closed loop mode being a mode in which the feedback information comprises information on the signals transmitted in each of the at least two subgroups of antennas.

5. The apparatus (10) of claim 1, wherein the means for controlling (14) is operable to adjust the signals transmitted on the antennas of one subgroup using a variable group specific beamforming vector and/or wherein the means for controlling (14) is operable to adapt the group specific beamforming vector based on radio channel conditions between the one subgroup of antennas and the mobile transceiver receiving a radio signal from the one subgroup.

6. The apparatus (10) of claim 1, wherein the means for controlling (14) is operable to adjust the variable group specific beamforming vector by selecting a predetermined beamforming vector from a limited set of beamforming vectors.

7. The apparatus (10) of claim 1, wherein the means for controlling (14) is operable to form a different antenna beam for each of the subgroups.

8. The apparatus (10) of claim 1, wherein the means for controlling (14) is operable to adjust a down tilt of an antenna pattern within a subgroup.

9. The apparatus (10) of claim 1, wherein the means for controlling (14) is operable to transmit a dedicated pilot signal in the second mode, the pilot signal being dedicated to the mobile transceiver (200).

10. The apparatus (10) of claim 1, wherein the means for controlling (14) is operable to receive signals using the plurality of antennas and using a variable weight vector having as many coefficients as there are antennas in the plurality of antennas.

11. The apparatus (10) of claim 1, wherein the means for controlling (14) is operable to transmit as many different data streams as subgroups.

12. The apparatus (10) of claim 1, wherein the means for controlling (14) is operable to transmit signals on the different subgroups using a precoding vector for precoding the signals transmitted of the subgroups, wherein information on the precoding vector is comprised in the feedback information.

13. The apparatus (10) of claim 1, wherein the means for controlling (14) is operable to form a beam, which is individually adapted to the mobile transceiver in the second mode.

14. A method for a base station transceiver in a mobile communication system, the base station transceiver (100) being operable to use a plurality of antennas to communicate with a mobile transceiver (200), the method comprising
receiving (32) feedback information from the mobile transceiver (200), the feedback information comprising information on a plurality of different radio signals received from the base station transceiver (100) at the mobile transceiver (200);
controlling (34) a transmission on the plurality of antennas in a first mode,
in which the plurality of antennas is subdivided in at least two subgroups of antennas, comprising
adjusting signals to be transmitted by a subgroup of antennas based on the feedback information, and
adjusting signals transmitted on the antennas of one subgroup among each other based on a group specific beamforming vector, and
controlling (36) a transmission on the plurality of antennas in a second mode, comprising
adjusting the signals transmitted on each of the plurality of antennas individually based on an antenna specific weight.

15. A computer program having a program code for performing the method of claim 14, when the computer program is executed on a computer or a processor.
